(19) **Europäisches Patentamt / European Patent Office / Office européen des brevets**

(11) **EP 4 756 946 A1**

(12) **EUROPEAN PATENT APPLICATION**
published in accordance with Art. 153(4) EPC

(43) Date of publication:
**10.06.2026 Bulletin 2026/24**

(21) Application number: **24849081.5**

(22) Date of filing: **26.07.2024**

(51) International Patent Classification (IPC):
*H01M 10/04* (2006.01)   *H01M 10/0587* (2010.01)
*H01M 50/531* (2021.01)   *H01M 50/586* (2021.01)
*H01M 50/595* (2021.01)

(52) Cooperative Patent Classification (CPC):
**H01M 10/04; H01M 10/0587; H01M 50/531;**
**H01M 50/586; H01M 50/595;** Y02E 60/10;
Y02P 70/50

(86) International application number:
**PCT/JP2024/026762**

(87) International publication number:
**WO 2025/028428 (06.02.2025 Gazette 2025/06)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(30) Priority: **31.07.2023 JP 2023124861**

(71) Applicant: **Panasonic Intellectual Property**
**Management Co., Ltd.**
**Kadoma-shi, Osaka 571-0057 (JP)**

(72) Inventor: **NAMBUYA, Arisa**
**Osaka 571-0057 (JP)**

(74) Representative: **Novagraaf International SA**
**Chemin de l'Echo 3**
**1213 Onex, Geneva (CH)**

(54) **SECONDARY BATTERY**

(57)    The purpose of the present invention is to reduce a gap between electrode plates in the vicinity of a winding start end part of a positive electrode generated by charging and discharging, and to suppress deterioration of charge/discharge cycle characteristics. This secondary battery is provided with: an electrode body in which a positive electrode (11) and a negative electrode are wound with a separator interposed therebetween; a positive electrode lead; and a protective tape. The positive electrode (11) has a long positive electrode core body, and a positive electrode mixture layer disposed on the positive electrode core body. At one end in the width direction of the positive electrode (11), at least one exposed part in which the surface of the positive electrode core body is exposed is provided. The exposed part includes an innermost exposed part positioned radially at the most inward location within the electrode body, the positive electrode lead includes an innermost positive electrode lead connected to the innermost exposed part, and the protective tape includes an innermost protective tape (16a) covering the innermost exposed part and the innermost positive electrode lead. The winding start end part of the positive electrode (11) is disposed at a position not overlapping the innermost protective tape (16a) in the radial direction of the electrode body.

Figure 3

**Description**

TECHNICAL FIELD

The present disclosure relates to a secondary battery, and more particularly to a secondary battery including an electrode assembly in which a positive electrode and a negative electrode are wound with a separator interposed therebetween.

BACKGROUND

In recent years, secondary batteries such as a lithium ion battery have been widely used in applications requiring a high capacity, high durability, rapid charge performance, and the like, such as an in-vehicle application and a power storage application. Since a positive electrode, which is a main constituent element of a secondary battery, greatly affects such performance, many studies have been conducted on the positive electrode.

For example, Patent Literature 1 discloses a positive electrode, which constitutes a wound-type electrode assembly, includes a band-shaped positive electrode core and a positive electrode mixture layer provided on at least one surface of the positive electrode core, and is provided with an exposed portion, in which a surface of the positive electrode core is exposed, at one end in a width direction of the positive electrode for connecting a positive electrode lead.

CITATION LIST

PATENT LITERATURE

Patent Literature 1: WO 2017/077698 A

SUMMARY

However, when a wound-type electrode assembly is prepared using a positive electrode provided with an exposed portion, in which a surface of a positive electrode core is exposed, at one end in a width direction of the positive electrode, a large surface pressure difference may occur during charging and discharging between an end in the width direction of the positive electrode and the other portion, namely a portion in which the positive electrode mixture layer is continuously provided in the length direction, and a gap may be formed between the electrode plates near the end in the width direction of the positive electrode.

Conventionally, a protective tape covering an exposed portion and a positive electrode lead connected to the exposed portion is provided, but when a wound-type electrode assembly is prepared and a winding start end of the positive electrode is disposed at a position overlapping the protective tape in a radial direction of the electrode assembly, a gap between electrode plates formed by charging and discharging of the battery described above may appear as a large gap near the winding start end of the positive electrode. When a large inter-plate gap is formed near the winding start end of the positive electrode by charging and discharging, this may lead to deterioration in charge-discharge cycle characteristics.

Therefore, an object of the present disclosure is to reduce an inter-plate gap near a winding start end of a positive electrode generated by charging and discharging, and to suppress deterioration in charge-discharge cycle characteristics.

A secondary battery according to the present disclosure includes an electrode assembly in which a positive electrode and a negative electrode are wound with a separator interposed therebetween; a positive electrode lead; and a protective tape, in which the positive electrode has a long positive electrode core, and a positive electrode mixture layer disposed on the positive electrode core, at one end in a width direction of the positive electrode, at least one exposed portion in which a surface of the positive electrode core is exposed is provided, the exposed portion includes an innermost exposed portion located at an innermost side in a radial direction of the electrode assembly, the positive electrode lead includes an innermost positive electrode lead connected to the innermost exposed portion, and the protective tape includes an innermost protective tape covering the innermost exposed portion and the innermost positive electrode lead, and a winding start end of the positive electrode is disposed at a position not overlapping the innermost protective tape in the radial direction of the electrode assembly.

According to the secondary battery according to the present disclosure, it is possible to reduce an inter-plate gap near a winding start end of a positive electrode generated by charging and discharging, and to suppress deterioration in charge-discharge cycle characteristics.

BRIEF DESCRIPTION OF DRAWINGS

FIG. 1 is a cross-sectional view of a secondary battery as an example of an embodiment.

FIG. 2 is a schematic plan view illustrating an example of a positive electrode before winding.

FIG. 3 is a schematic plan view illustrating a positive electrode after winding as viewed from a winding axis direction.

DESCRIPTION OF EMBODIMENTS

Hereinafter, an example of an embodiment of a secondary battery according to the present disclosure will be described in detail with reference to the drawings. Note that a configuration obtained by selectively combining components of a plurality of embodiments and modifications described below is included in the scope of the present disclosure.

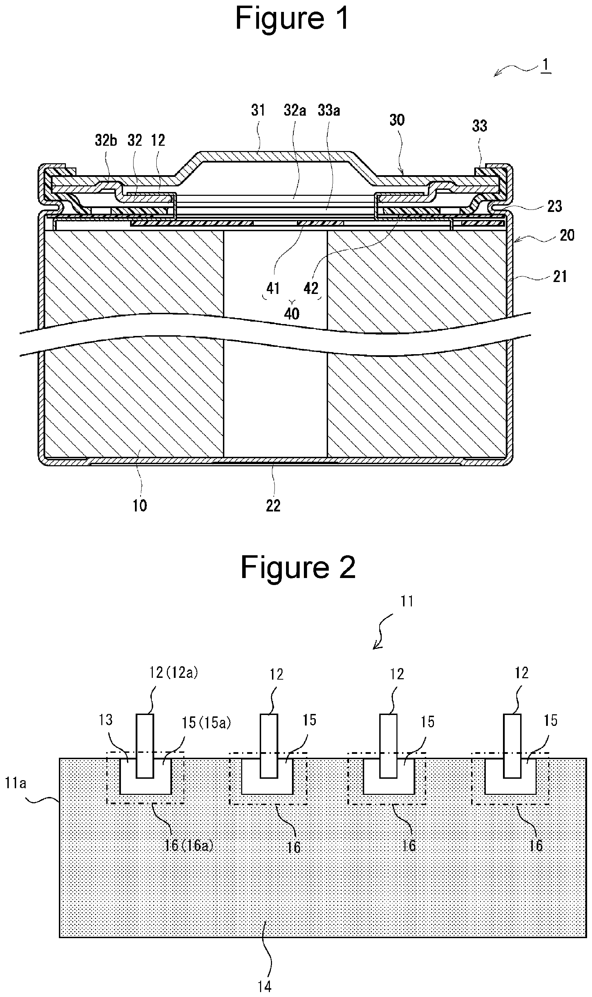

In the embodiment described below, as the secondary battery, a cylindrical battery in which a wound-type electrode assembly is housed in a bottomed cylindrical outer can is described as an example, but an outer casing of a battery is not limited to the cylindrical outer can, and the form of the battery is also not limited to the example shown in FIG. 1. Other embodiments of the secondary battery according to the present disclosure include a rectangular battery including a rectangular outer can, a pouch-type battery including an outer casing formed of a laminate sheet including a metal layer and a resin layer, and the like. The electrolyte may be an aqueous electrolyte, but in the present embodiment, a non-aqueous electrolyte is used.

FIG. 1 is a cross-sectional view of a secondary battery as an example of an embodiment. A secondary battery 1 shown in FIG. 1 includes an electrode assembly 10, a non-aqueous electrolyte, a bottomed cylindrical outer can 20 that houses the electrode assembly 10 and the non-aqueous electrolyte, and a sealing assembly 30 that closes an opening of the outer can 20. The electrode assembly 10 includes a positive electrode, a negative electrode, and a separator, and has a structure in which the positive electrode and the negative electrode are wound with the separator interposed therebetween. Hereinafter, for convenience of description, a sealing assembly 30 side of the secondary battery 1 is defined as an upper side, and a can bottom 22 side of the outer can 20 is defined as a lower side.

The outer can 20 is a bottomed cylindrical metal container having an opening at one end (upper end) in an axial direction, and has a side wall 21 formed in a cylindrical shape and a can bottom 22 having a circular shape in a bottom view. The outer can 20 is generally made of a metal containing iron as a main component, but may be made of a metal containing aluminum or the like as a main component. The outer can 20 has a groove portion 23 formed along a circumferential direction of the side wall 21. The groove portion 23 is formed at a position away from an opening edge (an upper end of the outer can 20) by a predetermined length near the opening of the outer can 20. A safety valve for releasing a gas due to an increase in internal pressure when an abnormality occurs may be formed on the can bottom 22 of the outer can 20.

The sealing assembly 30 includes a cap 31, a current collector plate 32, and a gasket 33, and is formed in a disk shape as a whole. The sealing assembly 30 is disposed on the groove portion 23 of the outer can 20, and is fixed to the upper end of the outer can 20 to close the opening of the outer can 20.

The cap 31 is a disk-shaped metal member, and is exposed to the outside of the outer can 20 and forms a top surface of the secondary battery 1. The cap 31 has a shape in which a central portion in the radial direction protrudes outward of the secondary battery 1. A wiring member may be connected to the cap 31 when the secondary battery 1 is modularized to form an assembled battery.

The current collector plate 32 is a metal member having substantially the same diameter as the cap 31, and is disposed closer to the electrode assembly 10 than the cap 31. The current collector plate 32 has an opening 32a at a central portion in the radial direction, and is formed in a ring shape. The cap 31 and the current collector plate 32 are welded to each other, and the current collector plate 32 is welded, for example, at a position closer to an outer circumferential edge than the center in the radial direction of the cap 31. In the current collector plate 32, a projection 32b is formed, and the projection 32b serves as a welded portion welded to the cap 31.

The gasket 33 is provided on an outer periphery of a laminate of the cap 31 and the current collector plate 32. The gasket 33 is a resin member that seals the inside of the battery and prevents contact of the cap 31 and the current collector plate 32 with the outer can 20 to ensure insulation between the outer can 20 and the sealing assembly 30. The gasket 33 is a ring-shaped resin member, in which an opening 33a is formed at a central portion in the radial direction so as to overlap the opening 32a of the current collector plate 32 in the vertical direction.

The secondary battery 1 further includes a positive electrode lead 12 connecting the positive electrode and the current collector plate 32 of the sealing assembly 30, and an upper insulating plate 40 disposed between the electrode assembly 10 and the sealing assembly 30. In the present embodiment, the positive electrode lead 12 electrically connects the positive electrode and the sealing assembly 30, and the sealing assembly 30 functions as a positive electrode external terminal. On the negative electrode side, a negative electrode core constituting the negative electrode is directly connected to the outer can 20, or a negative electrode lead electrically connects the negative electrode and the outer can 20, so that the outer can 20 functions as a negative electrode external terminal. The secondary battery 1 may have a lower insulating plate disposed between the electrode assembly 10 and the can bottom 22.

In the present embodiment, the upper insulating plate 40 includes a first insulating plate 41 and a second insulating plate 42 disposed closer to the sealing assembly 30 than the first insulating plate 41. The first insulating plate 41 is interposed between the electrode assembly 10 and the positive electrode lead 12 to prevent contact between the negative electrode and the positive electrode lead 12. The second insulating plate 42 is interposed between the groove portion 23 of the outer can 20 and the positive electrode lead 12 to prevent contact of the outer can 20 serving as a negative electrode external terminal with the positive electrode lead 12.

The non-aqueous electrolyte has lithium ion conductivity. The non-aqueous electrolyte may be a liquid electrolyte (electrolytic solution) or a solid electrolyte.

The liquid electrolyte (electrolytic solution) contains a non-aqueous solvent and an electrolyte salt dissolved in the non-aqueous solvent. As the non-aqueous solvent, for example, esters, ethers, nitriles, amides, and mixtures of two or more thereof are used. Examples of the non-aqueous solvent include ethylene carbonate (EC), ethyl methyl carbonate (EMC), dimethyl carbonate (DMC), diethyl carbonate (DEC), and mixed solvents thereof. The non-aqueous solvent may contain a halogen-substituted product in which at least a part of hydrogen in these solvents is substituted with a halogen atom such as fluorine (for example, fluoroethylene carbonate). As the electrolyte salt, for example, a lithium salt such as $LiPF_6$ is used.

As the solid electrolyte, for example, a solid or gel polymer electrolyte, an inorganic solid electrolyte, or the like can be used. As the inorganic solid electrolyte, a material known for all-solid-state lithium ion secondary batteries and the like (for example, an oxide-based solid electrolyte, a sulfide-based solid electrolyte, or a halogen-based solid electrolyte) can be used. The polymer electrolyte contains, for example, a lithium salt and a matrix polymer or a non-aqueous solvent, a lithium salt, and a matrix polymer. As the matrix polymer, for example, a polymer material that turns into a gel when the polymer material absorbs a non-aqueous solvent, can be used. Examples of the polymer material include a fluororesin, an acrylic resin, and a polyether resin.

All of the positive electrode, the negative electrode, and the separator constituting the electrode assembly 10 are band-shaped long bodies, and spirally wound and thus alternately stacked in a radial direction of the electrode assembly 10. The negative electrode is, for example, formed to have a size slightly larger than the positive electrode in order to prevent deposition of lithium. That is, the negative electrode is formed to be longer than the positive electrode in the length direction and the width direction. The separator is, for example, formed to have a size slightly larger than at least the positive electrode, and two separators are disposed so as to sandwich the positive electrode therebetween.

Hereinafter, the positive electrode, the negative electrode, and the separator constituting the electrode assembly 10 will be described in detail.

FIG. 2 is a schematic plan view illustrating an example of a positive electrode before winding. In FIG. 2, in order to clarify the configuration of the positive electrode, an insulating tape, which will be described later, is shown as a transparent view and indicated by a one-dot chain line. The positive electrode 11 shown in FIG. 2 is a band-shaped long body, and includes a long positive electrode core 13 and a positive electrode mixture layer 14 disposed on the positive electrode core 13. As the positive electrode core 13, for example, a foil of a metal, such as aluminum, an aluminum alloy, stainless steel, or titanium, which is stable in a potential range of the positive electrode, a film in which the metal is disposed on a surface layer thereof, or the like can be used. The positive electrode mixture layer 14 contains, for example, a positive electrode active material, a conductive agent, and a binder, and is provided on one surface or both surfaces of the positive electrode core 13.

As shown in FIG. 2, at one end in the width direction of the positive electrode 11, as a portion to which the positive electrode lead 12 is connected, a plurality of exposed portions 15 in which the surface of the positive electrode core 13 is exposed are provided at predetermined intervals in the length direction of the positive electrode 11. The plurality of exposed portions 15 are arranged in a line in the length direction of the positive electrode 11 at one end in the width direction of the positive electrode 11 located on the upper end side of the electrode assembly 10. In the positive electrode 11 shown in FIG. 2, a plurality of exposed portions 15 are provided, but the present invention is not limited thereto, and the number of exposed portions 15 may be one.

The length direction of the positive electrode 11 is a first direction along the horizontal direction in FIG. 2, and corresponds to the winding direction of the electrode assembly 10. The width direction of the positive electrode 11 is a second direction along the vertical direction in FIG. 2 and orthogonal to the first direction, and corresponds to the winding axis direction of the electrode assembly 10. The length (length in the first direction) of the positive electrode 11 is, for example, greater than or equal to 10 times and less than or equal to 100 times the width (length in the second direction) of the positive electrode 11, and is, for example, greater than or equal to 600 mm and less than or equal to 6000 mm. The width of the positive electrode 11 is, for example, greater than or equal to 50 mm and less than or equal to 100 mm.

The exposed portion 15 preferably has a rectangular shape in a front view. The length along the width direction of the positive electrode 11 (hereinafter referred to as "width") of each exposed portion 15 is preferably less than or equal to 25% of the width of the positive electrode 11, and more preferably greater than or equal to 10% and less than or equal to 20% of the width of the positive electrode 11. The width of each exposed portion 15 is, for example, greater than or equal to 7 mm and less than or equal to 15 mm. The length of each exposed portion 15 along the length direction of the positive electrode 11 needs to be larger than the width of the positive electrode lead 12. As an example, the length is greater than or equal to 5 mm and less than or equal to 70 mm. The interval between the exposed portions 15 may be constant or may be different. In the present description, the length of the exposed portion 15 means the length of the exposed portion 15 along the length direction of the positive electrode 11 unless otherwise specified.

In the example shown in FIG. 2, four exposed portions 15 are provided at one end in the width direction of the positive electrode 11, and among these exposed portions 15, the exposed portion 15 located on the innermost side in the radial direction of the electrode assembly 10 is referred to as "innermost exposed portion 15a". The innermost exposed portion 15a is also an exposed portion closest to the winding start end 11a of the positive electrode (one end in the length direction of the positive electrode 11). When only one exposed portion 15 is provided in the positive electrode 11, the exposed portion 15 becomes the innermost exposed portion 15a. The innermost exposed portion 15a is desirably disposed at a predetermined interval from the winding start end 11a of the positive electrode 11, and for example, is desirably provided within a range greater than or equal to 5% and less than or equal to 20% of the length of the positive electrode 11 from the winding start end 11a of the positive electrode 11. With respect to the radius of the electrode assembly 10, the innermost exposed portion 15a is desirably provided in a circle having a radius greater than or equal to 5% and less than or equal to 10% of the radius of the electrode assembly 10 from the winding center of the electrode assembly 10 in a plan view of the electrode assembly 10 viewed from the winding axis direction of the electrode assembly 10.

As shown in FIG. 2, a plurality of positive electrode leads 12 are connected to the plurality of exposed portions 15. Among the plurality of positive electrode leads 12, the positive electrode lead 12 connected to the innermost exposed portion 15a is referred to as "innermost positive electrode lead 12a". The positive electrode lead 12 is, for example, a strip-shaped conductive member, and is made of a metal containing aluminum as a main component. In the present embodiment, one end side in the longitudinal direction of each positive electrode lead 12 is connected to the exposed portion 15 of the positive electrode 11, and the other end side in the longitudinal direction is connected to the current collector plate 32 of the sealing assembly 30. The connection position of the positive electrode lead 12 in the exposed portion 15 is not particularly limited, and the positive electrode lead 12 may be disposed within the range of the exposed portion 15 so as not to overlap the positive electrode mixture layer 14. Examples of the connection method include ultrasonic welding and resistance welding.

As shown in FIG. 2, a plurality of protective tapes 16 are provided on the positive electrode 11 so as to cover each exposed portion 15 and each positive electrode lead 12. Among the plurality of protective tapes 16, the protective tape 16 covering the innermost exposed portion 15a and the innermost positive electrode lead 12a connected to the innermost exposed portion 15a is referred to as "innermost protective tape 16a". By providing the protective tape 16 covering the exposed portion 15 and the positive electrode lead 12, for example, when the separator is broken, it is possible to suppress the occurrence of an internal short circuit due to contact of the positive electrode lead 12 or the exposed portion 15 with the negative electrode.

The protective tape 16 is made of, for example, a material having an insulating property. Examples of the protective tape 16 include a tape of a polyolefin resin such as polyethylene, polypropylene, or polybutylene, a polyester resin such as polyvinyl chloride or polyethylene terephthalate, or a resin such as polyimide, polyamide, or polyphenylene sulfide.

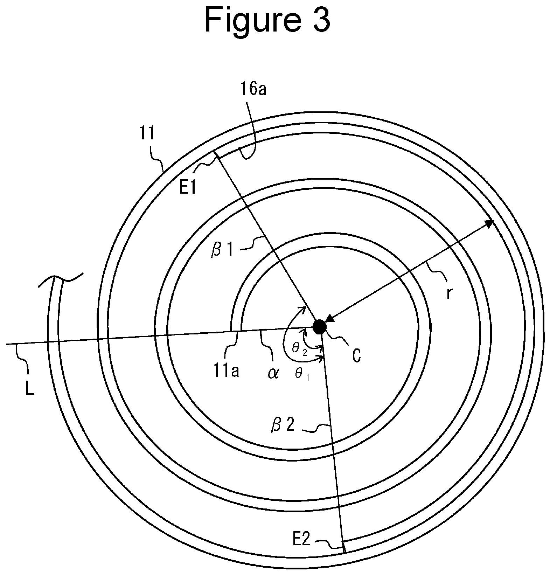

FIG. 3 is a schematic plan view illustrating a positive electrode after winding as viewed from a winding axis direction. In FIG. 3, in order to describe the positional relationship between the winding start end 11a of the positive electrode 11 and the innermost protective tape 16a, only a portion of the positive electrode 11 wound several turns from the winding start end 11a of the positive electrode 11, and the innermost protective tape 16a are shown, and the other configurations are omitted.

As shown in FIG. 3, the winding start end 11a of the positive electrode 11 is disposed at a position not overlapping the innermost protective tape 16a in the radial direction r of the electrode assembly 10. That is, in plan view of the positive electrode 11 (or the electrode assembly 10) as viewed from the winding axis direction, when the straight line $\alpha$ connecting the winding center (point C) of the electrode assembly 10 and the winding start end 11a of the positive electrode 11 is extended outward in the radial direction from the winding start end 11a of the positive electrode 11, the extended line L may not cross the innermost protective tape 16a. According to such a configuration, it is possible to reduce the gap near the winding start end of the positive electrode generated by charging and discharging, and to suppress deterioration in charge-discharge cycle characteristics. Although the mechanism of exerting the effect is not sufficiently clear, the following is presumed.

Since the winding start end 11a of the positive electrode 11 is disposed at a position not overlapping the innermost protective tape 16a in the radial direction r of the electrode assembly 10, in the radial direction r of the electrode assembly 10, the overlapping between the step caused by the winding start end 11a of the positive electrode 11 and the step caused by the thickness of the innermost protective tape 16a (including the thickness of the innermost positive electrode lead 12a) is eliminated, so that it is presumed that the local stress applied to the vicinity of the winding start end 11a of the positive electrode 11 due to charging and discharging is alleviated. As a result, distortion between the electrode plates near the winding start end 11a of the positive electrode 11 due to charging and discharging is suppressed, and thus, even if an inter-plate gap occurs, the size thereof can be kept small. As a result, deterioration in charge-discharge cycle characteristics can also be suppressed.

The innermost protective tape 16a preferably has a length greater than or equal to 0.5 turns and less than or equal to 0.8 turns along the winding direction of the electrode assembly 10. In other words, an angle $\theta_1$ formed between a straight line β1 connecting the winding center (point C) of the electrode assembly 10 and a start end E1 in the winding direction of the innermost protective tape 16a and a straight line β2 connecting the winding center (point C) of the electrode assembly 10 and a terminal end E2 in the winding direction of the innermost protective tape 16a is preferably greater than or equal to 72° and less than or equal to 180°. Since the innermost protective tape 16a satisfies the above-mentioned length, it is possible to more effectively suppress occurrence of an internal short circuit due to contact of the innermost exposed portion 15a and the innermost positive electrode lead 12a connected to the innermost exposed portion 15a with the negative electrode when the separator is broken. Usually, if there is no design intention with respect to the position of the winding start end 11a of the positive electrode 11, when the length of the innermost protective tape 16a in the winding direction becomes long, the innermost protective tape 16a and the winding start end 11a of the positive electrode 11 are likely to overlap each other in the radial direction of the electrode assembly 10. In the present embodiment, even when the innermost protective tape 16a has the above-mentioned length, the electrode assembly 10 is designed such that the winding start end 11a of the positive electrode 11 does not overlap the innermost protective tape 16a in the radial direction r of the electrode assembly 10.

An angle $\theta_2$ formed between a straight line α connecting the winding center (point C) of the electrode assembly 10 and the winding start end 11a of the positive electrode 11 and a straight line β2 connecting the winding center (point C) of the electrode assembly 10 and the terminal end E2 in the winding direction of the innermost protective tape 16a is preferably greater than 0° and less than or equal to 60°. When the battery is repeatedly charged and discharged, the positive electrode 11 may move along the winding direction such that the angle $\theta_2$ increases as the electrode assembly 10 expands and contracts. Therefore, by disposing the winding start end 11a of the positive electrode 11 so that the angle $\theta_2$ is greater than 0° and less than or equal to 60°, the distance between the winding start end 11a of the positive electrode 11 and the start end E1 in the winding direction of the innermost protective tape 16a is sufficiently ensured, and thus, even if the positive electrode 11 moves along the winding direction due to repeated charging and discharging of the battery, a risk that the winding start end 11a of the positive electrode 11 overlaps the innermost protective tape 16a in the radial direction r of the electrode assembly 10 is suppressed. As a result, even when the positive electrode 11 moves due to charging and discharging, generation of a large inter-plate gap near the winding start end 11a of the positive electrode 11 after the movement is suppressed, and deterioration in charge-discharge cycle characteristics can be further suppressed.

The average diameter of the electrode assembly 10 is, for example, greater than or equal to 15 mm and less than or equal to 100 mm. It is preferable that the above-mentioned technique based on the positional relationship between the winding start end 11a of the positive electrode 11 and the innermost protective tape 16a is applied to the electrode assembly 10 in which the average diameter satisfies the above-mentioned range. This makes it possible to further suppress deterioration in charge-discharge cycle characteristics. A preferable example of the diameter of the electrode assembly 10 is greater than or equal to 20 mm and less than or equal to 80 mm, or greater than or equal to 40 mm and less than or equal to 70 mm. The average diameter of the electrode assembly 10 is calculated from each measured value by measuring the diameter of the electrode assembly 10 at arbitrary 10 locations.

In the present embodiment, it is preferable to apply the above-mentioned technique based on the positional relationship between the winding start end 11a of the positive electrode 11 and the innermost protective tape 16a to the positive electrode 11 in which four or more exposed portions 15 are provided at one end in the width direction of the positive electrode 11 with predetermined intervals in the length direction of the positive electrode 11. This makes it possible to further suppress deterioration in charge-discharge cycle characteristics.

The positive electrode mixture layer 14 is formed by applying a positive electrode mixture slurry containing a positive electrode active material, a conductive agent, and a binder to both surfaces of the positive electrode core 13, and drying and compressing a coating film. At this time, in a portion corresponding to one end in the width direction of the positive electrode 11, the positive electrode mixture slurry is intermittently applied to leave a portion in which the positive electrode mixture layer 14 is not present and the surface of the positive electrode core 13 is exposed. This portion becomes the exposed portion 15. The positive electrode mixture slurry is intermittently applied so that the condition of L1 < L2 is satisfied.

Examples of the positive electrode active material contained in the positive electrode mixture layer 14 include a lithium metal composite oxide containing a transition metal element such as Ni, Co, or Mn. Examples of the metal element contained in the lithium metal composite oxide include Li, Ni, Co, Mn, Al, Be, B, Na, Mg, Si, K, Ca, Sc, Ti, V, Cr, Fe, Cu, Zn, Ga, Sr, Y, Zr, Nb, Mo, In, Sn, Sb, Ba, Ta, W, Pb, and Bi. The crystal structure of the lithium metal composite oxide is, for example, a layered rock salt structure belonging to a space group R-3m.

Examples of the conductive agent contained in the positive electrode mixture layer 14 include carbon black such as acetylene black and Ketjenblack, graphite, carbon nanotube (CNT), carbon nanofiber, graphene, metal fiber, metal powder, and conductive whisker. As the conductive agent, one type may be used alone or a plurality of types may be used in combination.

Examples of the binder contained in the positive electrode mixture layer 14 include fluorine-based resins such as polytetrafluoroethylene (PTFE) and polyvinylidene fluoride (PVDF), polyacrylonitrile (PAN), polyimide-based resins, acrylic resins, polyolefin-based resins, styrene-butadiene rubber (SBR), carboxymethyl cellulose (CMC) or a salt thereof, polyacrylic acid (PAA) or a salt thereof, polyvinyl alcohol (PVA), and polyethylene oxide (PEO). As the binder, one type may be used alone or a plurality of types may be used in combination.

The negative electrode includes a negative electrode core and a negative electrode mixture layer disposed on the negative electrode core. As the negative electrode core, a foil of a metal, such as copper, a copper alloy, stainless steel, nickel, or a nickel alloy, which is stable in a potential range of the negative electrode, a film in which the metal is disposed on the surface, or the like can be used. The negative electrode mixture layer contains, for example, a negative electrode active material and a binder, and is provided on both surfaces or one surface of the negative electrode core. As the negative electrode active material, a carbon material that reversibly occludes and releases lithium ions is generally used. As the negative electrode active material, an element to be alloyed with Li such as Si or Sn, a material containing the element, or the like may be used. As the binder, one similar to one used on the positive electrode side can be used.

As the separator, a porous sheet having an ion permeation property and an insulating property is used. Specific examples of the porous sheet include a microporous thin film, a woven fabric, and a nonwoven fabric. As a material of the separator, polyolefin such as polyethylene and polypropylene, cellulose, and the like are suitable. The separator may have a single-layer structure or a multilayer structure. The separator may have, for example, a multilayer structure including a thermoplastic resin layer of polyolefin or the like and a cellulose fiber layer, a two-layer structure of polyethylene (PE)/polypropylene (PP), or a three-layer structure of PE/PP/PE.

EXAMPLES

Hereinafter, the present disclosure will be further described with reference to Examples, but the present disclosure is not limited to Examples.

<Example 1>

[Preparation of positive electrode]

A lithium metal composite oxide as a positive electrode active material, acetylene black, and polyvinylidene fluoride (PVdF) were mixed at a solid content mass ratio of 98 : 1 : 1, and N-methyl-2-pyrrolidone (NMP) was used as a dispersion medium to prepare a positive electrode mixture slurry. The positive electrode mixture slurry was applied to both surfaces of a positive electrode core formed of an aluminum foil to form a coating film, and the coating film was dried and compressed. Thereafter, the positive electrode core was cut into a predetermined electrode size to obtain a positive electrode in which a positive electrode mixture layer was formed on both surfaces of the positive electrode core.

In Example 1, the positive electrode mixture slurry was intermittently applied, and eight exposed portions arranged in a line in the length direction of the positive electrode were provided at one end in the width direction of the positive electrode. Among these exposed portions, the innermost exposed portion was provided at a position 180 mm away from the winding start end of the positive electrode in the length direction of the positive electrode. The interval between the exposed portions was set to 350 mm. The positive electrode had a length of 3000 mm and a width of 65 mm, the width of each exposed portion was 10 mm, and the length of each exposed portion was 20 mm.

[Preparation of negative electrode]

As a negative electrode active material, one obtained by mixing natural graphite and a silicon-containing material (a composite material in which a fine Si phase is dispersed in a silicon oxide phase) at a mass ratio of 98 : 2 was used. A negative electrode active material, sodium carboxymethyl cellulose (CMC-Na), and a dispersion of styrene-butadiene rubber (SBR) were mixed at a solid content mass ratio of 100 : 1 : 1, and water was used as a dispersion medium to prepare a negative electrode mixture slurry. The negative electrode mixture slurry was applied to both surfaces of a negative electrode core formed of a copper foil, the coating film was dried, and then the coating film was rolled using a roller and cut into a predetermined electrode size to obtain a negative electrode in which a negative electrode mixture layer was formed on both surfaces of the negative electrode core. An exposed portion in which the surface of the negative electrode core was exposed was provided in a part of the negative electrode.

[Preparation of non-aqueous electrolytic solution]

In a mixed solvent obtained by mixing ethylene carbonate (EC), methyl ethyl carbonate (MEC), and dimethyl carbonate (DMC) at a volume ratio of 3 : 3 : 4 (25°C), $LiPF_6$ was dissolved at a concentration of 1.2 mol/liter to prepare a non-aqueous electrolytic solution.

[Preparation of test cell]

An aluminum lead as a positive electrode lead was welded to the exposed portion of the positive electrode, and a nickel lead as a negative electrode lead was welded to the exposed portion of the negative electrode. In addition, a protective tape was disposed so as to cover the exposed portion of the positive electrode and the aluminum lead, and a protective tape was disposed so as to cover the exposed portion of the negative electrode and the nickel lead. Then, the positive electrode and the negative electrode were spirally wound with a separator made of polyolefin interposed therebetween to prepare a wound-type electrode assembly having an average diameter of 40 mm. In the prepared electrode assembly, the winding start end of the positive electrode is disposed at a position not overlapping the innermost exposed portion on the positive electrode side and the innermost protective tape covering the innermost positive electrode lead connected to the innermost exposed portion in the radial direction of the electrode assembly. An angle $\theta_1$ formed between a straight line connecting the winding center of the electrode assembly and the start end in the winding direction of the innermost protective tape and a straight line connecting the winding center of the electrode assembly and the terminal end in the winding direction of the innermost protective tape is 120°. That is, the innermost protective tape has a length of about 0.77 turns along the winding direction of the electrode assembly. An angle $\theta_2$ formed between a straight line connecting the winding center of the electrode assembly and the winding start end of the positive electrode and a straight line connecting the winding center of the electrode assembly and the terminal end in the winding direction of the innermost protective tape is 5°.

The electrode assembly was housed in a bottomed cylindrical outer can, the non-aqueous electrolytic solution was injected into the outer can, and then the opening of the outer can was closed with a sealing assembly to obtain a cylindrical test cell.

<Example 2>

A test cell was prepared in the same manner as in Example except that in the preparation of the electrode assembly, the angle $\theta_2$ formed between the straight line connecting the winding center of the electrode assembly and the winding start end of the positive electrode and the straight line connecting the winding center of the electrode assembly and the terminal end in the winding direction of the innermost protective tape was set to 15°.

<Example 3>

A test cell was prepared in the same manner as in Example except that in the preparation of the electrode assembly, the angle $\theta_2$ formed between the straight line connecting the winding center of the electrode assembly and the winding start end of the positive electrode and the straight line connecting the winding center of the electrode assembly and the terminal end in the winding direction of the innermost protective tape was set to 90°.

<Comparative Example 1>

A test cell was prepared in the same manner as in Example 1 except that in the preparation of the electrode assembly, the angle $\theta_2$ formed between the straight line connecting the winding center of the electrode assembly and the winding start end of the positive electrode and the straight line connecting the winding center of the electrode assembly and the terminal end in the winding direction of the innermost protective tape was set to 0°, and the winding start end of the positive electrode was disposed at a position overlapping the innermost protective tape (specifically, the terminal end in the winding direction of the innermost protective tape) in the radial direction of the electrode assembly.

<Comparative Example 2>

A test cell was prepared in the same manner as in Example 1 except that in the preparation of the electrode assembly, the angle $\theta_2$ formed between the straight line connecting the winding center of the electrode assembly and the winding start end of the positive electrode and the straight line connecting the winding center of the electrode assembly and the terminal end in the winding direction of the innermost protective tape was set to -20°, and the winding start end of the positive electrode was disposed at a position overlapping the innermost protective tape in the radial direction of the electrode assembly.

[Charge-discharge cycle test]

Each test cell was charged at a constant current of 0.3 It in a temperature environment of 25°C until the battery voltage reached 4.2 V, and then charged at a constant voltage of 4.2 V until the current value reached 0.02 It. Thereafter, the test cell was discharged at a constant current of 0.5 It until the battery voltage reached 2.5 V. This charging and discharging operation was taken as one cycle, 500 cycles were performed, and the capacity retention rate was calculated by the following formula. The results are shown in Table 1. A higher capacity retention rate indicates that deterioration in charge-discharge cycle characteristics has been more effectively suppressed.

Capacity retention rate (%) = (discharge capacity at 500th cycle/discharge capacity at 1st cycle) $\times$ 100

[Evaluation of inter-plate gap near winding start end of positive electrode]

A CT image of the upper portion of the electrode assembly as viewed from the winding axis direction of the electrode assembly was obtained using the test cell subjected to 500 charge-discharge cycles. From the CT image, the presence or absence of a gap between the electrode plates near the winding start end of the positive electrode was checked, and when there was a gap, the size of the gap (the maximum value of the length in the radial direction of the gap) was measured. The results are shown in Table 1.

[Table 1]

|  | Angle | | Evaluation | |
| --- | --- | --- | --- | --- |
|  | $\theta_1$ | $\theta_2$ | Size of inter-plate gap | Capacity retention rate |
| Example 1 | 120° | 5° | 50 $\mu$m | 85% |
| Example 2 | 120° | 15° | 30 $\mu$m | 90% |
| Example 3 | 120° | 90° | 60 $\mu$m | 83% |
| Comparative Example 1 | 120° | 0° | 180 $\mu$m | 75% |
| Comparative Example 2 | 120° | -20° | 200 $\mu$m | 70% |

As shown in Table 1, in all of Examples 1 to 3, the inter-plate gap near the winding start end of the positive electrode was smaller, and the capacity retention rate in the charge-discharge cycle showed a higher value than in Comparative Examples 1 to 2. From these results, in the electrode assembly in which the positive electrode and the negative electrode are wound with the separator interposed therebetween, when the winding start end of the positive electrode is disposed at a position not overlapping the innermost exposed portion of the positive electrode and the innermost protective tape covering the innermost positive electrode lead connected to the innermost exposed portion in the radial direction of the electrode assembly, it is possible to reduce the inter-plate gap near the winding start end of the positive electrode generated by charging and discharging, and to suppress deterioration in charge-discharge cycle characteristics. Further, among Examples 1 to 3, the inter-plate gap near the winding start end of the positive electrode was smaller and the capacity retention rate in the charge-discharge cycle was higher in Examples 1 to 2 than in Example 3. From these results, by setting the angle $\theta_2$ formed between the straight line connecting the winding center of the electrode assembly and the winding start end of the positive electrode and the straight line connecting the winding center of the electrode assembly and the terminal end in the winding direction of the innermost protective tape of the positive electrode within the range of greater than 0° and less than or equal to 60°, it is possible to further reduce the inter-plate gap near the winding start end of the positive electrode generated by charging and discharging and to further suppress deterioration in charge-discharge cycle characteristics.

[Supplementary Notes]

(1) A secondary battery, including an electrode assembly in which a positive electrode and a negative electrode are wound with a separator interposed therebetween; a positive electrode lead; and a protective tape, wherein

the positive electrode has a long positive electrode core, and a positive electrode mixture layer disposed on the positive electrode core,
at one end in a width direction of the positive electrode, at least one exposed portion in which a surface of the positive electrode core is exposed is provided,
the exposed portion includes an innermost exposed portion located at an innermost side in a radial direction of the electrode assembly, the positive electrode lead includes an innermost positive electrode lead connected to the innermost exposed portion, and the protective tape includes an innermost protective tape covering the innermost exposed portion and the innermost positive electrode lead, and

a winding start end of the positive electrode is disposed at a position not overlapping the innermost protective tape in the radial direction of the electrode assembly.

(2) The secondary battery according to (1), wherein the innermost protective tape has a length greater than or equal to 0.5 turns and less than or equal to 0.8 turns along a winding direction of the electrode assembly.

(3) The secondary battery according to (1) or (2), wherein an angle formed between a straight line connecting a winding center of the electrode assembly and a winding start end of the positive electrode and a straight line connecting a winding center of the electrode assembly and a terminal end in the winding direction of the innermost protective tape is greater than 0° and less than or equal to 60°.

(4) The secondary battery according to any one of (1) to (3), wherein an average diameter of the electrode assembly is greater than or equal to 15 mm and less than or equal to 100 mm.

(5) The secondary battery according to any one of (1) to (4), wherein at one end in the width direction of the positive electrode core, four or more of the exposed portions are provided at predetermined intervals in a length direction of the positive electrode.

REFERENCE SIGNS LIST

| 1 | Secondary battery |
| 10 | Electrode assembly |
| 11 | Positive electrode |
| 11a | Winding start end of positive electrode |
| 12 | Positive electrode lead |
| 13 | Positive electrode core |
| 14 | Positive electrode mixture layer |
| 15 | Exposed portion |
| 15a | Innermost exposed portion |
| 16 | Protective tape |
| 16a | Innermost protective tape |
| 20 | Outer can |
| 21 | Side wall |
| 22 | Can bottom |
| 23 | Groove portion |
| 30 | Sealing assembly |
| 31 | Cap |
| 32 | Current collector plate |
| 32a, 33a | Opening |
| 32b | Projection |
| 33 | Gasket |
| 40 | Upper insulating plate |
| 41 | First insulating plate |
| 42 | Second insulating plate |

Claims

1. A secondary battery, comprising an electrode assembly in which a positive electrode and a negative electrode are wound with a separator interposed therebetween; a positive electrode lead; and a protective tape, wherein

the positive electrode has a long positive electrode core, and a positive electrode mixture layer disposed on the positive electrode core,

at one end in a width direction of the positive electrode, at least one exposed portion in which a surface of the positive electrode core is exposed is provided,

the exposed portion includes an innermost exposed portion located at an innermost side in a radial direction of the electrode assembly, the positive electrode lead includes an innermost positive electrode lead connected to the innermost exposed portion, and the protective tape includes an innermost protective tape covering the innermost exposed portion and the innermost positive electrode lead, and
a winding start end of the positive electrode is disposed at a position not overlapping the innermost protective tape in the radial direction of the electrode assembly.

2. The secondary battery according to claim 1, wherein the innermost protective tape has a length greater than or equal to 0.5 turns and less than or equal to 0.8 turns along a winding direction of the electrode assembly.

3. The secondary battery according to claim 1 or 2, wherein an angle formed between a straight line connecting a winding center of the electrode assembly and a winding start end of the positive electrode and a straight line connecting a winding center of the electrode assembly and a terminal end in the winding direction of the innermost protective tape is greater than 0° and less than or equal to 60°.

4. The secondary battery according to claim 1 or 2, wherein an average diameter of the electrode assembly is greater than or equal to 15 mm and less than or equal to 100 mm.

5. The secondary battery according to claim 1 or 2, wherein at one end in the width direction of the positive electrode core, four or more of the exposed portions are provided at predetermined intervals in a length direction of the positive electrode.

# Figure 1

# Figure 2

# Figure 3

## INTERNATIONAL SEARCH REPORT

| International application No. |
|---|
| **PCT/JP2024/026762** |

| A. | CLASSIFICATION OF SUBJECT MATTER |
|---|---|

*H01M 10/04*(2006.01)i; *H01M 10/0587*(2010.01)i; *H01M 50/531*(2021.01)i; *H01M 50/586*(2021.01)i; *H01M 50/595*(2021.01)i
FI:  H01M10/04 W; H01M10/0587; H01M50/531; H01M50/586; H01M50/595

According to International Patent Classification (IPC) or to both national classification and IPC

| B. | FIELDS SEARCHED |
|---|---|

Minimum documentation searched (classification system followed by classification symbols)

H01M10/00-10/39; H01M50/50-50/598

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| A | JP 2018-206571 A (CKD CORPORATION) 27 December 2018 (2018-12-27) | 1-5 |
| A | WO 2018/180748 A1 (SANYO ELECTRIC CO., LTD.) 04 October 2018 (2018-10-04) | 1-5 |
| A | JP 2018-506158 A (LG CHEM, LTD.) 01 March 2018 (2018-03-01) | 1-5 |

☐ Further documents are listed in the continuation of Box C.  ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
|---|---|
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **30 September 2024** | **15 October 2024** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (July 2022)

**INTERNATIONAL SEARCH REPORT**
Information on patent family members

International application No.

**PCT/JP2024/026762**

| Patent document cited in search report | | | Publication date (day/month/year) | Patent family member(s) | | | Publication date (day/month/year) |
|---|---|---|---|---|---|---|---|
| JP | 2018-206571 | A | 27 December 2018 | CN | 108987821 | A | |
| WO | 2018/180748 | A1 | 04 October 2018 | US | 2021/0111465 | A1 | |
| | | | | CN | 110337752 | A | |
| JP | 2018-506158 | A | 01 March 2018 | US | 2018/0254505 | A1 | |
| | | | | WO | 2017/090932 | A1 | |
| | | | | EP | 3249733 | A1 | |
| | | | | KR | 10-2017-0061591 | A | |
| | | | | CN | 107408719 | A | |

Form PCT/ISA/210 (patent family annex) (July 2022)

**REFERENCES CITED IN THE DESCRIPTION**

**Patent documents cited in the description**

- WO 2017077698 A